(19) Europäisches Patentamt
European Patent Office
Office européen des brevets

(11) EP 1 229 376 A1

(12) EUROPEAN PATENT APPLICATION
published in accordance with Art. 158(3) EPC

(43) Date of publication:
**07.08.2002 Bulletin 2002/32**

(51) Int Cl.$^7$: **G02C 7/04**, C08F 290/06, A61F 2/16

(21) Application number: **99974066.5**

(22) Date of filing: **29.09.1999**

(86) International application number:
**PCT/JP99/05330**

(87) International publication number:
**WO 01/23945 (05.04.2001 Gazette 2001/14)**

(84) Designated Contracting States:
**AT BE CH CY DE DK ES FI FR GB GR IE IT LI LU MC NL PT SE**

(71) Applicant: **Kuraray Co., Ltd.**
**Okayama 710-8622 (JP)**

(72) Inventors:
- **YASUDA, Tokugen,**
  **Kansai Research Institute Co. Ltd**
  **Kyoto-shi, Kyoto 600-8813 (JP)**
- **INOUE, Hitoshi,**
  **Kansai Research Institute Co. Ltd.**
  **Kyoto-shi, Kyoto 600-8813 (JP)**
- **KITAJIMA, Satsuki,**
  **Kansai Research Inst. Co., Ltd.**
  **Kyoto-shi, Kyoto 600-8813 (JP)**
- **SATOH, Masahiro,**
  **Kansai Research Institute Co. Ltd**
  **Kyoto-shi, Kyoto 600-8813 (JP)**
- **YANG, Wu, Kansai Research Institute Co., Ltd.**
  **Kyoto-shi, Kyoto 600-8813 (JP)**
- **OMURA, Ikuo, Kuraray Co., Ltd.**
  **Kurashiki-shi, Okayama 710-8622 (JP)**
- **FUJITANI, Takumi, Kuraray Co., Ltd.**
  **Osaka-shi, Osaka 530-8611 (JP)**

(74) Representative: **VOSSIUS & PARTNER**
**Siebertstrasse 4**
**81675 München (DE)**

(54) **OCULAR LENS MATERIAL**

(57) An ocular lens material made of a copolymer of monomers respectively represented by formula (I), (II) and (III), which has a well-balanced combination of mechanical strength, flexibility, oxygen permeability, shape stability, transparency, and hydrophilicity.

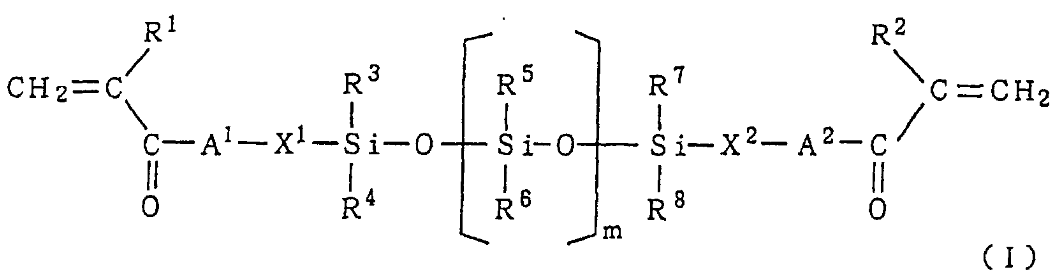

(I)

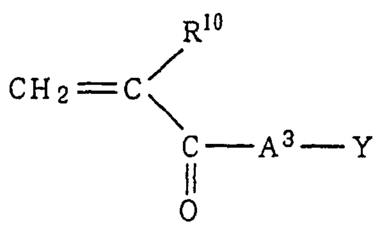

(II)

EP 1 229 376 A1

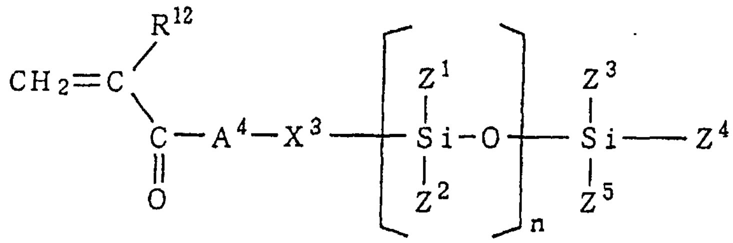

(III)

[In the formula, $R^1$ and $R^2$ each represents H or $CH_3$; $R^3$ to $R^8$ each represents a $C_{1-10}$ monovalent hydrocarbon group optionally substituted with fluorine atom(F); $A^1$ and $A^2$ each represents -O-, -S-, or -$NR^9$- (wherein $R^9$ represents H or a $C_{1-10}$ monovalent hydrocarbon group optionally substituted with F); $X^1$ and $X^2$ each represents a single bond or a divalent organic group; m is 0 to 300; $R^{10}$ represents H or $CH_3$; $A^3$ represents -O-, -S-, or -$NR^{11}$-(wherein $R^{11}$ represents H, or a $C_{1-10}$ monovalent hydrocarbon group optionally substituted with F); Y represents a monocyclic monovalent hydrocarbon group; $R^{12}$ represents H or $CH_3$; $A^4$ represents -O-, -S-, or -$NR^{13}$- (wherein $R^{13}$ represents H or a $C_{1-10}$ monovalent hydrocarbon group optionally substituted with F); $X^3$ represents a single bond or a divalent organic group; $Z^1$ to $Z^5$ each represents either a $C_{1-10}$ monovalent hydrocarbon group optionally substituted with F or -$OR^{14}$ [wherein $R^{14}$ represents either a $C_{1-10}$ monovalent hydrocarbon group optionally substituted with F or a group represented by -O-$SiR^{15}R^{16}R^{17}$ {wherein $R^{15}$ to $R^{17}$ each represents either a $C_{1-10}$ monovalent hydrocarbon group optionally substituted with F or -O-$R^{18}$ (wherein $R^{18}$ represents a $C_{1-10}$ monovalent hydrocarbon group optionally substituted with F)}]; and n is 0 to 300.]

## Description

### TECHNICAL FIELD

The present invention relates to an ocular lens material and ocular lenses made of it. More precisely, the invention relates to an ocular lens material and ocular lenses having a well-balanced combination of mechanical strength, durability, flexibility, oxygen permeability, shape stability, transparency and hydrophilicity. Having the characteristics, the ocular lens material and the ocular lenses of the invention are especially useful for contact lenses and intraocular implants.

### BACKGROUND ART

Contact lenses are generally grouped into soft contact lenses and hard contact lenses. Soft contact lenses that are heretofore available on the market are principally those of polymer hydrates that consist essentially of structural units derived from 2-hydroxyethyl methacrylate and/or vinylpyrrolidone. Hard contact lenses available on the market are principally those of polymers that consist essentially of structural units derived from methyl methacrylate, fluoroalkyl methacrylate or silicone methacrylate.

Soft contact lenses of polymer hydrates have a good feel to eyes, but since the oxygen permeability through them is low, it is often difficult to fit them to eyes continuously for a long period of time. In addition, because of the water-containing property of the polymer hydrates for them, soft contact lenses are often troubled by bacteria and fungi growing around them, and therefore require complicated sterilization and disinfection. Still another drawback of soft contact lenses is that their mechanical strength is low.

On the other hand, the oxygen permeability through hard contact lenses is relatively high, and they can be well fitted to eyes continuously for a long period of time, and, in addition, they do not require disinfection. However, as they are hard, one drawback of hard contact lenses is that their feel to eyes is not so good.

To overcome the drawbacks of the conventional hydrated soft contact lenses and hard contact lenses, non-hydrated soft contact lenses of silicone rubber have been developed. The oxygen permeability through non-hydrated soft contact lenses of silicone rubber is high, and the lenses are not hydrated and are highly flexible. Therefore, they can be fitted to eyes continuously for a long period of time, their feel to eyes is good, and they do not require disinfection.

However, the mechanical strength of non-hydrated soft contact lenses of silicone rubber is low, and the lenses are brittle and are not durable. In addition, since the water repellency of the lenses on their surface is extremely high, some cases have been reported that the lenses have adhered to the cornea and have caused a serious ocular disorder.

Given that situation, the following have been reported for solving the problems with such non-hydrated contact lenses of silicone rubber.

(1) Contact lenses of a homopolymer of a difunctional siloxane monomer terminated with a polymerizing unsaturated group at its both ends, or a copolymer of the difunctional siloxane monomer and an alkyl (meth)acrylate (JP-A 24047/1979);

(2) Non-hydrated soft contact lenses of a copolymer of a difunctional siloxane monomer terminated with a polymerizing unsaturated group at its both ends and a polycyclic ester of (meth)acrylic acid (JP-A 51714/1981); and

(3) Non-hydrated soft contact lenses of a copolymer of tris(trimethylsiloxy)silylpropyl methacrylate, a (meth)acrylate with a fluoroalkyl alcohol having from 2 to 8 carbon atoms, and an acrylate with a linear alcohol having from 4 to 8 carbon atoms (JP-A 37312/1988).

The oxygen permeability through the non-hydrated contact lenses of above (1) is good, but the mechanical strength and the flexibility of the lenses are not good. The non-hydrated contact lenses of above (2) and (3) are not good in point of one or more properties of oxygen permeability, flexibility and mechanical strength. These lenses do not satisfy the balance of the properties necessary for contact lenses.

### DISCLOSURE OF THE INVENTION

The object of the present invention is to provide a high-quality ocular lens material and lenses made of it, which have good oxygen permeability, mechanical strength, durability and flexibility and have other various properties of shape stability, transparency and wettability with water, and which therefore satisfy the balance of the properties necessary for ocular lens materials and ocular lenses.

To attain the object as above, we, the present inventors have assiduously studied and, as a result, have found that a copolymer obtained from a monomer mixture of essentially three monomers, a specific organosiloxane monomer terminated with a polymerizing unsaturated group at both ends of the molecule, a specific monomer having a monovalent hydrocarbon group derived from a monocyclic hydrocarbon, and a specific monofunctional organosiloxane monomer has high oxygen permeability and has good mechanical strength, durability, flexibility, shape stability, transparency and wettability with water, and is favorable for an ocular lens material, and that ocular lenses such as contact lenses and intraocular implants made of the material are highly effective for eyesight correction and have the advantages of good feel to dyes, easy handlability, strength, durability and safety. On the basis of these findings, we have completed the present invention.

Specifically, the invention provides an ocular lens material that comprises a copolymer obtained by polymerizing a monomer mixture of essentially (a) an organosiloxane monomer of the following general formula (I) [hereinafter this will be referred to as a difunctional organosiloxane monomer (I)]:

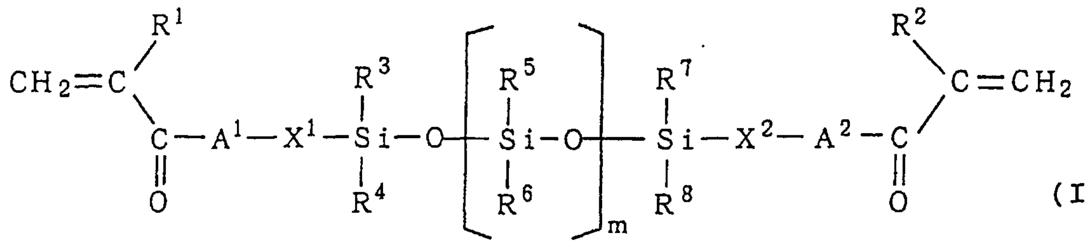
(I)

wherein $R^1$ and $R^2$ each independently represent a hydrogen atom or a methyl group; $R^3$, $R^4$, $R^5$, $R^6$, $R^7$ and $R^8$ each independently represent a monovalent hydrocarbon group with from 1 to 10 carbon atoms optionally substituted with fluorine atom(s); $A^1$ and $A^2$ each independently represent an oxygen atom, a sulfur atom, or a group of a formula, $-NR^9-$ (in which $R^9$ represents a hydrogen atom, or a monovalent hydrocarbon group with from 1 to 10 carbon atoms optionally substituted with fluorine atom(s)); $X^1$ and $X^2$ each independently represent a single bond, or a divalent organic group; and m indicates an integer falling between 0 and 300;

(b) a monomer of the following general formula (II) [hereinafter this will be referred to as a monocyclic monomer (II)]:

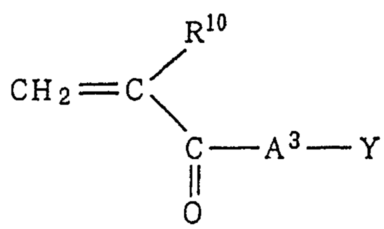
(II)

wherein $R^{10}$ represents a hydrogen atom or a methyl group; $A^3$ represents an oxygen atom, a sulfur atom, or a group of a formula, $-NR^{11}-$ (in which $R^{11}$ represents a hydrogen atom, or a monovalent hydrocarbon group with from 1 to 10 carbon atoms optionally substituted with fluorine atom(s)); Y represents a monovalent hydrocarbon group derived from a monocyclic hydrocarbon; and (c) an organosiloxane monomer of the following general formula (III) [hereinafter this will be referred to as a monofunctional organosiloxane monomer (III)]:

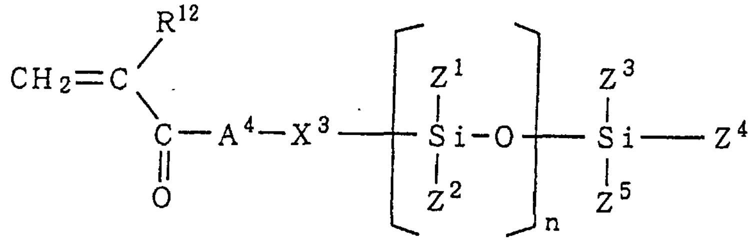
(III)

wherein $R^{12}$ represents a hydrogen atom or a methyl group; $A^4$ represents an oxygen atom, a sulfur atom, or a group of a formula, $-NR^{13}-$ (in which $R^{13}$ represents a hydrogen atom, or a monovalent hydrocarbon group with from 1 to 10 carbon atoms optionally substituted with fluorine atom(s)); $X^3$ represents a single bond or a divalent organic group; $Z^1$,

$Z^2$, $Z^3$, $Z^4$ and $Z^5$ each independently represent a monovalent hydrocarbon group with from 1 to 10 carbon atoms optionally substituted with fluorine atom(s), or a group of a formula $-OR^{14}$ (in which $R^{14}$ represents a monovalent hydrocarbon group with from 1 to 10 carbon atoms optionally substituted with fluorine atom(s)), or a group of a formula $-O-SiR^{15}R^{16}R^{17}$ [in which $R^{15}$, $R^{16}$ and $R^{17}$ each independently represent a monovalent hydrocarbon group with from 1 to 10 carbon atoms optionally substituted with fluorine atom(s), or a group of a formula $-O-R^{18}$ (in which $R^{18}$ represents a monovalent hydrocarbon group with from 1 to 10 carbon atoms optionally substituted with fluorine atom(s)]; and n indicates an integer falling between 0 and 300.

The invention also provides ocular lenses, especially contact lenses and intraocular implants made of the above-mentioned ocular lens material of the invention.

BEST MODES OF CARRYING OUT THE INVENTION

As described hereinabove, the ocular lens material of the invention comprises a copolymer obtained by polymerizing a monomer mixture of essentially a difunctional organosiloxane monomer (I) of formula (I), a monocyclic monomer (II) of formula (II) and a monofunctional organosiloxane monomer (III) of formula (III).

In formula (I) representing a difunctional organosiloxane monomer (I), $R^1$ and $R^2$ each independently (individually) represent a hydrogen atom or a methyl group.

$R^3$, $R^4$, $R^5$, $R^6$, $R^7$ and $R^8$ each independently represent a monofunctional hydrocarbon group with from 1 to 10 carbon atoms optionally substituted with fluorine atom(s).

Preferably, $R^3$, $R^4$, $R^5$, $R^6$, $R^7$ and $R^8$ each independently represent an alkyl group, a cycloalkyl group, a monovalent aromatic group, or any of these groups substituted with fluorine atom(s). Concretely, for example, they include a methyl group, an ethyl group, an n-propyl group, an isopropyl group, an n-butyl group, a sec-butyl group, a t-butyl group, a pentyl group, a hexyl group, a cyclohexyl group, a phenyl group, a benzyl group, a 2,2,2-trifluoroethyl group, a 2,2,3,3-tetrafluoropropyl group, a 2,2,3,3,3-pentafluoropropyl group, a 1-trifluoromethyl-2,2,2-trifluoroethyl group, a 2-(perfluorobutyl)ethyl group, a 2-(perfluorohexyl)ethyl group, a 2-(perfluorooctyl)ethyl group, a 1H,1H,5H-octafluoropentyl group, a 1H,1H,7H-dodecafluoroheptyl group, and a pentafluorophenyl group.

Especially in view of the easiness in producing the difunctional organosiloxane monomer (I), the polymerizability of the monomer and the moldability of the ocular lens material comprising the copolymer, it is more desirable that $R^3$, $R^4$, $R^5$, $R^6$, $R^7$ and $R^8$ each are an alkyl group with from 1 to 3 carbon atoms or an alkyl group substituted with fluorine atom(s), and even more desirably, $R^3$, $R^4$, $R^5$, $R^6$, $R^7$ and $R^8$ are all methyl groups.

If the hydrocarbon group for $R^3$, $R^4$, $R^5$, $R^6$, $R^7$ and $R^8$ has 11 or more carbon atoms, the difunctional organosiloxane monomer (I) is difficult to produce, and, in addition, the polymerizability of the monomer and also the moldability and the hydrophilicity of the ocular lens material comprising the copolymer lower.

In formula (I), $A^1$ and $A^2$ each independently represent an oxygen atom, a sulfur atom, or a group of a formula, $-NR^9-$in which $R^9$ represents a hydrogen atom, or a monovalent hydrocarbon group with from 1 to 10 carbon atoms optionally substituted with fluorine atom(s).

If the hydrocarbon group for $R^9$ in the group of formula $-NR^9-$ has 11 or more carbon atoms, the difunctional organosiloxane monomer (I) is difficult to produce, and, in addition, the polymerizability of the monomer and also the moldability and the hydrophilicity of the ocular lens material comprising the copolymer lower.

Preferred examples of $R^9$ in the group of formula $-NR^9-$are a hydrogen atom, a methyl group, an ethyl group, an n-propyl group, an isopropyl group, an n-butyl group, a sec-butyl group, a t-butyl group, a pentyl group, a hexyl group, a cyclohexyl group, a phenyl group, a benzyl group, a 2,2,2-trifluoroethyl group, a 2,2,3,3-tetrafluoropropyl group, a 2,2,3,3,3-pentafluoropropyl group, a 1-trifluoromethyl-2,2,2-trifluoroethyl group, a 2-(perfluorobutyl)ethyl group, a 2-(perfluorohexyl)ethyl group, a 2-(perfluorooctyl)ethyl group, a 1H,1H,5H-octafluoropentyl group, a 1H,1H,7H-dodecafluoroheptyl group, and a pentafluorophenyl group.

In view of the easiness in producing the difunctional organosiloxane monomer (I), the polymerizability of the monomer and the moldability of the ocular lens material comprising the copolymer, it is desirable that $A^1$ and $A^2$ each are an oxygen atom or $-NR^9-$ in which $R^9$ is a hydrogen atom or an alkyl group with from 1 to 3 carbon atoms optionally substituted with fluorine atom(s), more desirably they each are an oxygen atom or $-NR^9-$ in which $R^9$ is a hydrogen atom or a methyl group, and even more desirably they each are an oxygen atom or -NH-.

In formula (I), $X^1$ and $X^2$ each independently represent a single bond, or a divalent organic group. Preferred examples of the divalent organic group for them are an alkylene group, an oxyalkylene group, a polyoxyalkylene group, and a combination of an alkylene group and a (poly)oxyalkylene group, optionally substituted with, for example, a hydroxyl group.

The alkylene group for $X^1$ and/or $X^2$ is preferably an alkylene group having from 1 to 6 carbon atoms, or an alkylene group substituted with a hydroxyl group. Its examples are a methylene group, an ethylene group, a trimethylene group, a tetramethylene group, a pentamethylene group, a hexamethylene group, a 1-hydroxy-ethylene group, a 1-hydroxy-trimethylene group, a 2-hydroxy-trimethylene group, a 1-hydroxy-tetramethylene group, a 2-hydroxy-tetramethylene group, a 1-hydroxy-pentamethylene group, a 2-hydroxy-pentamethylene group, a 1-hydroxy-hexamethylene group, and a 2-hydroxy-hexamethylene group. If the alkylene group has 7 or more carbon atoms, the moldability and the mechanical strength of the ocular lens material comprising the copolymer will lower.

The oxyalkylene group or the polyoxyalkylene group for $X^1$ and/or $X^2$ is preferably a (poly)oxyalkylene group in which the alkylene group constituting the oxyalkylene unit has from 1 to 6 carbon atoms. Concretely, for example, it includes a (poly)oxymethylene group, a (poly)oxyethylene group, a (poly)oxytrimethylene group, a (poly)oxyisopropylene group, a (poly)oxytetramethylene group, a (poly)oxypentamethylene group, and a (poly)oxyhexamethylene group.

In the (poly)oxyalkylene group, the number of the repetitive oxyalkylene units preferably falls between 1 and 100, more preferably between 1 and 30. If the number of the repetitive oxyalkylene units in the (poly)oxyalkylene group is larger than 100, the polymerizability of the difunctional organosiloxane monomer (I) and also the moldability and the mechanical strength of the ocular lens material comprising the copolymer will lower.

In the combined group of an alkylene group and a (poly)oxyalkylene group for $X^1$ and/or $X^2$, it is desirable that the number of carbon atoms constituting the alkylene group and the number of carbon atoms constituting the alkylene group in the oxyalkylene unit in the (poly)oxyalkylene group both fall between 1 and 6 and the number of the repetitive oxyalkylene units in the (poly)oxyalkylene group falls between 1 and 100, more desirably between 1 and 30, in view of the easiness in producing the difunctional organosiloxane monomer (I) and of the moldability and the mechanical strength of the ocular lens material comprising the copolymer.

Examples of the group of the type are a methylene(poly)oxyethylene group, an ethylene(poly)oxyethylene group, a trimethylene(poly)oxyethylene group, a methylene(poly)oxypropylene group, an ethylene(poly)oxypropylene group and a trimethylene(poly)oxypropylene group, in which the number of the repetitive oxyalkylene units falls between 1 and 100.

Of the groups mentioned above, it is more desirable that $X^1$ and $X^2$ each are a methylene group, an ethylene group, a trimethylene group, a tetramethylene group, a 1-hydroxy-trimethylene group, a 2-hydroxy-trimethylene group, a 1-hydroxy-tetramethylene group, a 2-hydroxy-tetramethylene group, or a (poly)oxymethylene, (poly)oxyethylene or (poly)oxytrimethylene group in which the number of the repetitive oxyalkylene units falls between 1 and 30, in view of the easiness in producing the difunctional organosiloxane monomer (I), the polymerizability of the monomer, and the moldability and the mechanical strength of the ocular lens material comprising the copolymer. Even more desirably, they each are a methylene group, an ethylene group, a trimethylene group, a 1-hydroxy-trimethylene group, a 2-hydroxy-trimethylene group, or a (poly)oxyethylene group in which the number of the repetitive oxyethylene units falls between 1 and 30.

In formula (I), m indicates an integer falling between 0 and 300. In view of the polymerizability of the difunctional organosiloxane monomer (I) and of the moldability and the mechanical strength of the ocular lens material comprising the copolymer, m preferably falls between 0 and 250, more preferably between 0 and 200.

In formula (II) representing the monocyclic monomer (II), $R^{10}$ represents a hydrogen atom or a methyl group.

$A^3$ represents an oxygen atom, a sulfur atom, or a group of a formula, $-NR^{11}-$ in which $R^{11}$ represents a hydrogen atom, or a monovalent hydrocarbon group with from 1 to 10 carbon atoms optionally substituted with fluorine atom(s). If the hydrocarbon group for $R^{11}$ in the group of formula $-NR^{11}-$ has 11 or more carbon atoms, the monocyclic monomer (II) is difficult to produce, and, in addition, the polymerizability of the monomer and also the moldability and the hydrophilicity of the ocular lens material comprising the copolymer lower.

Preferred examples of $R^{11}$ in the group of formula $-NR^{11}-$are a hydrogen atom, a methyl group, an ethyl group, an n-propyl group, an isopropyl group, an n-butyl group, a sec-butyl group, a t-butyl group, a pentyl group, a hexyl group, a cyclohexyl group, a phenyl group, a benzyl group, a 2,2,2-trifluoroethyl group, a 2,2,3,3-tetrafluoropropyl group, a 2,2,3,3,3-pentafluoropropyl group, a 1-trifluoromethyl-2,2,2-trifluoroethyl group, a 2-(perfluorobutyl)ethyl group, a 2-(perfluorohexyl)ethyl group, a 2-(perfluorooctyl)ethyl group, a 1H,1H,5H-octafluoropentyl group, a 1H,1H,7H-dodecafluoroheptyl group, and a pentafluorophenyl group.

In view of the easiness in producing the monocyclic monomer (II), the polymerizability of the monomer and the moldability of the ocular lens material comprising the copolymer, it is desirable that $A^3$ is an oxygen atom or $-NR^{11}-$ in which $R^{11}$ is a hydrogen atom or an alkyl group with from 1 to 3 carbon atoms optionally substituted with fluorine atom(s), more desirably it is an oxygen atom or $-NR^{11}-$ in which $R^{11}$ is a hydrogen atom or a methyl group, and even more desirably it is an oxygen atom or -NH-.

In formula (II), Y represents a monovalent hydrocarbon group derived from a monocyclic hydrocarbon. The "monocyclic hydrocarbon" referred to herein means that the hydrocarbon to give Y does not have a condensed ring formed through condensation of 2 or more monocyclic rings (e.g., naphthalene ring) and has monocyclic hydrocarbon ring(s) only. So far as it has monocyclic hydrocarbon ring(s) only, the monocyclic hydrocarbon to give Y may be either an alicyclic hydrocarbon or an aromatic hydrocarbon. The monocyclic hydrocarbon may have only one monocyclic hydrocarbon ring in the molecule, or may have two or more monocyclic hydrocarbon rings in the molecule.

Preferred examples of the group Y derived from such a monocyclic hydrocarbon are a cycloalkyl group, a

cycloalkylalkyl group, a phenyl group, and a phenylalkyl group. Concretely, for example, they are a cyclohexyl group, a cyclohexylmethyl group, a cyclohexylethyl group, a cyclohexylpropyl group, a cyclohexylbutyl group, a cyclohexylpentyl group, a cyclohexylhexyl group, a phenyl group, a benzyl group, a phenylethyl group, a phenylpropyl group, a phenylbutyl group, a phenylpentyl group, and a phenylhexyl group. If desired, these groups may have one or more substituents (e.g., methyl, ethyl, n-propyl, isopropyl, n-butyl, sec-butyl, t-butyl, pentyl, hexyl, cyclohexyl, phenyl, biphenyl, benzyl) on the cyclohexane or benzene ring.

In view of the easiness in producing the monocyclic monomer (II), the polymerizability of the monomer, and the mechanical strength and the flexibility of the ocular lens material comprising the comonomer, Y is preferably a group derived from a cyclohexane ring-having monocyclic hydrocarbon, more preferably a cyclohexyl group.

In formula (III) representing the monofunctional organosiloxane monomer (III), $R^{12}$ represents a hydrogen atom or a methyl group.

$A^4$ represents an oxygen atom, a sulfur atom, or a group of a formula, $-NR^{13}-$ in which $R^{13}$ represents a hydrogen atom, or a monovalent hydrocarbon group with from 1 to 10 carbon atoms optionally substituted with fluorine atom(s). If the hydrocarbon group for $R^{13}$ in the group of formula $-NR^{13}-$ has 11 or more carbon atoms, the monofunctional organosiloxane monomer (III) is difficult to produce, and, in addition, the polymerizability of the monomer and also the moldability and the hydrophilicity of the ocular lens material comprising the copolymer lower.

Preferred examples of $R^{13}$ in the group of formula $-NR^{13}-$are a hydrogen atom, a methyl group, an ethyl group, an n-propyl group, an isopropyl group, an n-butyl group, a sec-butyl group, a t-butyl group, a pentyl group, a hexyl group, a cyclohexyl group, a phenyl group, a benzyl group, a 2,2,2-trifluoroethyl group, a 2,2,3,3-tetrafluoropropyl group, a 2,2,3,3,3-pentafluoropropyl group, a 1-trifluoromethyl-2,2,2-trifluoroethyl group, a 2-(perfluorobutyl)ethyl group, a 2-(perfluorohexyl)ethyl group, a 2-(perfluorooctyl)ethyl group, a 1H,1H,5H-octafluoropentyl group, a 1H,1H,7H-dodecafluoroheptyl group, and a pentafluorophenyl group.

In view of the easiness in producing the monofunctional organosiloxane monomer (III), the polymerizability of the monomer and the moldability of the ocular lens material comprising the copolymer, it is desirable that $A^4$ is an oxygen atom or $-NR^{13}-$ in which $R^{13}$ is a hydrogen atom or an alkyl group with from 1 to 3 carbon atoms optionally substituted with fluorine atom(s), more desirably it is an oxygen atom or $-NR^{13}-$in which $R^{13}$ is a hydrogen atom or a methyl group, and even more desirably it is an oxygen atom or -NH-.

In formula (III), $X^3$ represents a single bond, or a divalent organic group. Preferred examples of the divalent organic group for $X^3$ are an alkylene group, an oxyalkylene group, a polyoxyalkylene group, and a combination of an alkylene group and a (poly)oxyalkylene group, optionally substituted with, for example, a hydroxyl group.

The alkylene group for $X^3$ is preferably an alkylene group having from 1 to 6 carbon atoms, or an alkylene group substituted with a hydroxyl group. Its examples are a methylene group, an ethylene group, a trimethylene group, a tetramethylene group, a pentamethylene group, a hexamethylene group, a 1-hydroxy-ethylene group, a 1-hydroxy-trimethylene group, a 2-hydroxy-trimethylene group, a 1-hydroxy-tetramethylene group, a 2-hydroxy-tetramethylene group, a 1-hydroxy-pentamethylene group, a 2-hydroxy-pentamethylene group, a 1-hydroxy-hexamethylene group, and a 2-hydroxy-hexamethylene group.

If the alkylene group has 7 or more carbon atoms, the moldability and the mechanical Strength of the ocular lens material comprising the copolymer will lower.

The oxyalkylene group or the polyoxyalkylene group for $X^3$ is preferably a (poly)oxyalkylene group in which the alkylene group constituting the oxyalkylene unit has from 1 to 6 carbon atoms. Concretely, for example, it includes a (poly)oxymethylene group, a (poly)oxyethylene group, a (poly)oxytrimethylene group, a (poly)oxyisopropylene group, a (poly)oxytetramethylene group, a (poly)oxypentamethylene group, and a (poly)oxyhexamethylene group. In the (poly)oxyalkylene group, the number of the repetitive oxyalkylene units preferably falls between 1 and 100, more preferably between 1 and 30.

If the number of the repetitive oxyalkylene units in the (poly)oxyalkylene group is larger than 100, the polymerizability of the monofunctional organosiloxane monomer (III) and also the moldability and the mechanical strength of the ocular lens material comprising the copolymer will lower.

In the combined group of an alkylene group and a (poly)oxyalkylene group for $X^3$, it is desirable that the number of carbon atoms constituting the alkylene group and the number of carbon atoms constituting the alkylene group in the oxyalkylene unit in the (poly)oxyalkylene group both fall between 1 and 6 and the number of the repetitive oxyalkylene units in the (poly)oxyalkylene group falls between 1 and 100, more desirably between 1 and 30, in view of the easiness in producing the monofunctional organosiloxane monomer (III) and of the moldability and the mechanical strength of the ocular lens material comprising the copolymer.

Examples of the group of the type are a methylene(poly)oxyethylene group, an ethylene(poly)oxyethylene group, a trimethylene(poly)oxyethylene group, a methylene(poly)oxypropylene group, an ethylene(poly)oxypropylene group and a trimethylene(poly)oxypropylene group, in which the number of the repetitive oxyalkylene units falls between 1 and 100.

Of the groups mentioned above, it is more desirable that $X^3$ is a methylene group, an ethylene group, a

trimethylene group, a tetramethylene group, a 1-hydroxy-trimethylene group, a 2-hydroxy-trimethylene group, a 1-hydroxy-tetramethylene group, a 2-hydroxy-tetramethylene group, or a (poly)oxymethylene, (poly)oxyethylene or (poly) oxytrimethylene group in which the number of the repetitive oxyalkylene units falls between 1 and 30, in view of the easiness in producing the monofunctional organosiloxane monomer (III), the polymerizability of the monomer, and the moldability and the mechanical strength of the ocular lens material comprising the copolymer. Even more desirably, $X^3$ is a methylene group, an ethylene group, a trimethylene group, a 1-hydroxy-trimethylene group, a 2-hydroxy-trimethylene group, or a (poly)oxyethylene group in which the number of the repetitive oxyethylene units falls between 1 and 30.

In formula (III), $Z^1$, $Z^2$, $Z^3$, $Z^4$ and $Z^5$ each independently represent any of:

<1> a monovalent hydrocarbon group with from 1 to 10 carbon atoms optionally substituted with fluorine atom(s);
<2> a group of a formula $-OR^{14}$ in which $R^{14}$ represents a monovalent hydrocarbon group with from 1 to 10 carbon atoms optionally substituted with fluorine atom(s); or
<3> a group of a formula $-O-SiR^{15}R^{16}R^{17}$ in which $R^{15}$, $R^{16}$ and $R^{17}$ each independently represent a monovalent hydrocarbon group with from 1 to 10 carbon atoms optionally substituted with fluorine atom(s), or a group of a formula $-O-R^{18}$ (in which $R^{18}$ represents a monovalent hydrocarbon group with from 1 to 10 carbon atoms optionally substituted with fluorine atom(s).

For $Z^1$, $Z^2$, $Z^3$, $Z^4$ and/or $Z^5$, the monovalent hydrocarbon group with from 1 to 10 carbon atoms optionally substituted with fluorine atom(s) in the case <1>; the hydrocarbon group $R^{14}$ in the case <2>; the monovalent hydrocarbon group with from 1 to 10 carbon atoms optionally substituted with fluorine atom(s) for $R^{15}$, $R^{16}$ and $R^{17}$ in the case <3>; and the hydrocarbon group $R^{18}$ in the case <3> are preferably an alkyl group, a cycloalkyl group, a monovalent aromatic group, or any of these groups substituted with fluorine atom(s). Concretely, for example, they include a methyl group, an ethyl group, an n-propyl group, an isopropyl group, an n-butyl group, a sec-butyl group, a t-butyl group, a pentyl group, a hexyl group, a cyclohexyl group, a phenyl group, a benzyl group, a 2,2,2-trifluoroethyl group, a 2,2,3,3-tetrafluoropropyl group, a 2,2,3,3,3-pentafluoropropyl group, a 1-trifluoromethyl-2,2,2-trifluoroethyl group, a 2-(perfluorobutyl)ethyl group, a 2-(perfluorohexyl)ethyl group, a 2-(perfluorooctyl)ethyl group, a 1H,1H,5H-octafluoropentyl group, a 1H,1H,7H-dodecafluoroheptyl group, and a pentafluorophenyl group.

Especially in view of the easiness in producing the monofunctional organosiloxane monomer (III), the polymerizability of the monomer and the moldability of the ocular lens material comprising the copolymer, it is more desirable that the hydrocarbon group mentioned above is an alkyl group with from 1 to 3 carbon atoms or an alkyl group substituted with fluorine atom(s), and even more desirably, it is a methyl groups.

If the hydrocarbon group has 11 or more carbon atoms, the monofunctional organosiloxane monomer (III) is difficult to produce, and, in addition, the polymerizability of the monomer and also the moldability and the hydrophilicity of the ocular lens material comprising the copolymer lower.

In view of the easiness in producing the monofunctional organosiloxane monomer (III), the polymerizability of the monomer, and the moldability and the hydrophilicity of the ocular lens material comprising the copolymer, it is desirable that $Z^1$, $Z^2$, $Z^3$, $Z^4$ and $Z^5$ in formula (III) is any of an alkyl group having from 1 to 3 carbon atoms; or a group of $-OR^{14}$ in which $R^{14}$ is an alkyl group having from 1 to 3 carbon atoms; or a group of $-O-SiR^{15}R^{16}R^{17}$ in which $R^{15}$, $R^{16}$ and $R^{17}$ each are an alkyl group having from 1 to 3 carbon atoms. More desirably, they are any of a methyl group, a methoxy group and a trimethylsiloxy group.

In formula (III), n indicates an integer falling between 0 and 300, preferably between 0 and 200. If n is larger than 300, the polymerizability of the monofunctional organosiloxane monomer (III) and also the moldability and the mechanical strength of the ocular lens material comprising the copolymer lower.

The ocular lens material of the invention comprises the copolymer obtained by polymerizing the monomer mixture of essentially the difunctional organosiloxane monomer (I), the monocyclic monomer (II) and the monofunctional organosiloxane monomer (III) mentioned above.

The copolymer that constitutes the ocular lens material of the invention is preferably one obtained by polymerizing a monomer mixture in which the total content of the difunctional organosiloxane monomer (I), the monocyclic monomer (II) and the monofunctional organosiloxane monomer (III) is at least 70 % by weight of the monomer mixture, more preferably at least 75 % by weight, even more preferably at least 80 % by weight thereof.

If the total content of the three monomers in the monomer mixture is smaller than 70 % by weight of the monomer mixture, the mechanical strength and the flexibility of the ocular lens material comprising the copolymer obtained by polymerizing the monomer mixture and the ocular lenses made of the material and also the oxygen permeability through them will lower.

The uppermost limit of the total content of the difunctional organosiloxane monomer (I), the monocyclic monomer (II) and the monofunctional organosiloxane monomer (III) in the monomer mixture to be polymerized into the copolymer for the ocular lens material of the invention is not specifically defined, and the monomer mixture may be

composed of the three monomers only (that is, the total content of the three monomers in the monomer mixture may be 100 % by weight).

In the monomer mixture to be polymerized into the copolymer for the ocular lens material of the invention, the proportion of each of the difunctional organosiloxane monomer (I), the monocyclic monomer (II) and the monofunctional organosiloxane monomer (III) preferably falls between 5 and 80 % by weight of the monomer mixture for further enhancing the mechanical strength and the flexibility of the ocular lens material comprising the copolymer. In particular, when the monomer mixture is composed of the three, the difunctional organosiloxane monomer (I), the monocyclic monomer (II) and the monofunctional organosiloxane monomer (III) only, it is desirable that the difunctional organosiloxane monomer (I) accounts for from 10 to 80 % by weight of the monomer mixture, the monocyclic monomer (II) for from 5 to 70 % by weight thereof, and the monofunctional organosiloxane monomer (III) for from 5 to 70 % by weight thereof, for more enhancing the mechanical strength and the flexibility of the copolymer that constitutes the ocular lens material and the ocular lenses of the invention.

In addition to the difunctional organosiloxane monomer (I), the monocyclic monomer (II) and the monofunctional organosiloxane monomer (III) therein, the monomer mixture to be used in producing the copolymer for the ocular lens material may optionally contain, if desired, any other monomers copolymerizable these monomers. The optional monomers that may be in the monomer mixture are, for example, hydrophilic monomers, hydrophobic monomers and polyfunctional crosslinking monomers. One or more such optional monomers may be in the monomer mixture either singly or as combined.

Additional hydrophilic monomers, if used in the monomer mixture along with the difunctional organosiloxane monomer (I), the monocyclic monomer (II) and the monofunctional organosiloxane monomer (III) therein, can improve the hydrophilicity of the ocular lens material and the ocular lenses. However, if the hydrophilic monomers in the monomer mixture are too much, the degree of hydration in the ocular lenses will be too high, and if so, the lenses will be often troubled by bacteria and fungi growing around them and will require sterilization and disinfection. In order to omit the sterilization and disinfection of the ocular lenses, it is desirable that the content of the hydrophilic monomers in the monomer mixture is smaller than 25 % by weight of the monomer mixture, more preferably smaller than 20 % by weight, even more preferably smaller than 15 % by weight thereof.

Additional hydrophobic monomers, if used in the monomer mixture along with the difunctional organosiloxane monomer (I), the monocyclic monomer (II) and the monofunctional organosiloxane monomer (III) therein, can improve the lipid adhesion resistance of the ocular lens material and the ocular lenses. However, if the hydrophobic monomers in the monomer mixture are too much, the mechanical strength and the flexibility of the ocular lens material and the ocular lenses and also the oxygen permeability through them will lower. In order to keep the good properties of the lens material and the lenses, it is desirable that the content of the hydrophobic monomers in the monomer mixture is smaller than 30 % by weight of the monomer mixture, more preferably smaller than 25 % by weight, even more preferably smaller than 20 % by weight thereof.

Additional polyfunctional crosslinking monomers, if used in the monomer mixture along with the difunctional organosiloxane monomer (I), the monocyclic monomer (II) and the monofunctional organosiloxane monomer (III) therein, can further improve the shape stability of the ocular lens material and the ocular lenses. However, if the crosslinking monomers in the monomer mixture are too much, the ocular lens material and the ocular lenses will lose the flexibility and the oxygen permeability through them will lower. The amount of the crosslinking monomers that may be in the monomer mixture varies, depending on the number of the functional groups in the monomers . For example, when a difunctional crosslinking monomer is in the monomer mixture, its amount is preferably smaller than 20 % by weight of the monomer mixture, more preferably smaller than 15 % by weight, even more preferably smaller than 10 % by weight.

For ensuring the good properties such as mechanical strength, flexibility, oxygen permeability and shape stability of the ocular lens material and the ocular lenses of the invention, the total content of the additional monomers such as hydrophilic monomers, hydrophobic monomers and crosslinking monomers in the monomer mixture to form the copolymer that constitutes the ocular lens material is preferably at most 30 % by weight of the monomer mixture, more preferably at most 25 % by weight, even more preferably at most 20 % by weight thereof.

The additional hydrophilic monomers may be any ones copolymerizable with the difunctional organosiloxane monomer (I), the monocyclic monomer (II) and the monofunctional organosiloxane monomer (III), and not harmful to human bodies. For example, they include unsaturated carboxylic acids such as (meth)acrylic acid, itaconic acid, and their salts; (meth)acrylamides such as (meth)acrylamide, N,N-dimethylacrylamide, N,N-diethylacrylamide, N-methylolacrylamide, dimethylaminopropyl(meth)acrylamide, N-acryloylmorpholine; N-vinyllactams such as N-vinyl-2-pyrrolidone, N-vinyl-2-piperidone, N-vinyl-6-hexanelactam, N-vinyl-3-methyl-2-pyrrolidone,N-vinyl-3-methyl-piperidone, N-vinyl-3-methyl-6-hexanelactam; hydroxyl group-having (meth)acrylates such as 2-hydroxyethyl (meth)acrylate, 3-hydroxypropyl (meth)acrylate, polyethylene glycol (meth)acrylate; and amino group-having (meth)acrylates such as 2-(diethylamino)ethyl methacrylate. One or more such hydrophilic monomers may be in the monomer mixture either singly or as combined. Of those hydrophilic monomers, preferred are unsaturated carboxylic acids such as (meth)acrylic acid and itaconic acid, as well as (meth)acrylamides such as N,N-dimethylacrylamide, acrylamide and N-acryloylmorpholine, in view of the balance of the polymerizability of the monomer mixture, and the moldability and the hydrophilicity of the ocular lens material comprising the copolymer.

The additional hydrophobic monomers may be any ones copolymerizable with the difunctional organosiloxane monomer (I), the monocyclic monomer (II) and the monofunctional organosiloxane monomer (III), and not harmful to human bodies. For example, they include $C_{1-30}$ alkyl esters of (meth)acrylic acid such as methyl (meth)acrylate, ethyl (meth)acrylate, isopropyl (meth)acrylate, n-butyl (meth)acrylate, t-butyl (meth)acrylate, isobutyl (meth)acrylate, t-amyl (meth)acrylate, 2-ethylhexyl (meth)acrylate, lauryl (meth)acrylate; fluorine-substituted $C_{1-30}$ alkyl esters of (meth)acrylic acid such as 2,2,2-trifluoroethyl (meth)acrylate, 2,2,3,3-tetrafluoropropyl (meth)acrylate, 2,2,3,3,3-pentafluoropropyl (meth)acrylate, 2,2,2-trifluoro-1-trifluoromethylethyl (meth)acrylate, 2-hydroxy-4,4,5,5,6,6,7,7,8,8,9,9,10,11,11, 11-hexadecafluoro-10-trifluoromethylundecyl (meth)acrylate; aromatic vinyl compounds such as styrene, methylstyrene; vinyl esters of aliphatic carboxylic acids such as vinyl acetate; and alkyl esters of itaconic acid or crotonic acid such as methyl itaconate, methyl crotonate. One or more such hydrophobic monomers may be in the monomer mixture either singly or as combined. Of those hydrophobic monomers, preferred are fluorine-substituted $C_{1-30}$ alkyl esters of (meth)acrylic acid, and $C_{1-30}$ alkyl esters of (meth)acrylic acid, as they are effective for improving the lipid adhesion resistance, the oxygen permeability and the mechanical strength of the ocular lens material and the ocular lenses.

The additional, polyfunctional crosslinking monomers may be any ones capable of copolymerizing with the difunctional organosiloxane monomer (I), the monocyclic monomer (II) and the monofunctional organosiloxane monomer (III) to form a crosslinking structure in the copolymer, and not harmful to human bodies. For example, they include ethylene glycol di(meth)acrylate, diethylene glycol di(meth)acrylate, triethylene glycol di(meth)acrylate, tetraethylene glycol di(meth)acrylate, nonaethylene glycol di(meth)acrylate, tetradecaethylene glycol di(meth)acrylate, allyl (meth) acrylate, trimethylolpropane tri(meth)acrylate, 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, 2,2-bis[p-(γ-methacryloyloxy-β-hydroxypropoxy)phenyl]propane. One or more such crosslinking monomers may be in the monomer mixture either singly or as combined.

For obtaining a colored, ocular lens material (copolymer), a colorant may be added to the monomer mixture for the copolymer.

The copolymer to constitute the ocular lens material of the invention may be produced by polymerizing the monomer mixture that comprises the difunctional organosiloxane monomer (I), the monocyclic monomer (II) and the monofunctional organosiloxane monomer (III) and optionally other polymerizing monomers and a colorant, in any known polymerization mode of, for example, radical polymerization, anionic polymerization, cationic polymerization or radiation polymerization.

The type of the polymerization initiator to be used is not specifically defined, and may be selected from any known ones depending on the polymerization method employed. For example, when the copolymer to constitute the ocular lens material is produced through thermal radical polymerization, the monomer mixture may be polymerized in any known manner in the presence of a known thermal radical polymerization initiator such as benzoyl peroxide, isopropyl percarbonate, lauroyl peroxide, methyl ethyl ketone peroxide, 2.2'-azobisisobutyronitrile, 2,2'-azobismethyl isobutyrate, 2,2'-azobisdimethylvaleronitrile, 2,2'-azobisisobutylamide, or 2,2'-azobisdimethyl isobutyrate. When the copolymer to constitute the ocular lens material is produced through optical radical polymerization, for example, the monomer mixture may be polymerized by exposing it to energy rays such as UV rays, visible rays, X-rays or electronic rays in any known manner in the presence of an optical radical polymerization initiator such as diethoxyacetophenone, 1-hydroxycyclohexyl phenyl ketone, 2,2-dimethoxy-2-phenylacetophenone, phenothiazine, diisopropylxanthogen disulfide, benzoin, or benzoin methyl ether.

If the amount of the polymerization initiator used in polymerizing the monomer mixture is too small, the polymerization will take a lot of time; but if too large, the copolymer produced will be cracked. Therefore, the amount of the polymerization initiator to be used should be controlled to fall within a suitable range. In general, the amount of the polymerization initiator to be used preferably falls between 0.001 and 5 % by weight of the monomer mixture, more preferably between 0.004 and 4 % by weight, even more preferably between 0.01 and 3 % by weight thereof.

For forming the ocular lens material (copolymer) into ocular lenses, employable are any known methods heretofore employed in the art for producing plastic lenses, and no specific limitation shall apply thereto. For example, the ocular lenses may be produced as follows:

(1) The monomer mixture that comprises the difunctional organosiloxane monomer (I), the monocyclic monomer (II) and the monofunctional organosiloxane monomer (III) and optionally other polymerizing monomers and a colorant is polymerized, and molded into articles having a predetermined shape (e.g., sheets, plates, blocks) of the ocular lens material (copolymer) of the invention, and the shaped articles are cut and polished into ocular lenses - this is a lathe-cut method.

(2) The monomer mixture that comprises the difunctional organosiloxane monomer (I), the monocyclic monomer (II) and the monofunctional organosiloxane monomer (III) and optionally other polymerizing monomers and a colorant is cast into a mold of which the cavity corresponds to the ocular lens to be produced, and polymerized and shaped in the mold to obtain the intended ocular lens - this is a mold method.

(3) The monomer mixture that comprises the difunctional organosiloxane monomer (I), the monocyclic monomer (II) and the monofunctional organosiloxane monomer (III) and optionally other polymerizing monomers and a colorant is dropwise applied onto the surface of a mold rapidly rotating around its rotary shaft to thereby make the monomer mixture radially spread on the mold surface and, at the same time, the monomer mixture thus spread thereon is polymerized and shaped into the intended ocular lens - this is a spin-cast method.

The ocular lens material of the invention is highly flexible and is not hydrated. Therefore, for forming it into ocular lenses such as contact lenses and intraocular implants, the mold method (2) and the spin-cast method (3) are preferred, as the ocular lenses produced have the advantage of higher dimensional accuracy.

Preferably, the ocular lenses, especially contact lenses and intraocular implants of the invention are hydrophilicated on their surface to improve the wettability thereof with water. For hydrophilicating the ocular lenses, employable are any methods capable of hydrophilicating the surface of ocular lenses. For example, employable are a method of processing ocular lenses with an aqueous alkali; a method of plasma treatment through glow discharge in a vapor flow; a method of graft-polymerizing a hydrophilic monomer in the surface of ocular lenses; and a method of hydrophilicating the surface of ocular lenses while the lenses are molded. Especially preferred for the ocular lenses of the invention is the third method of hydrophilicating the surface of ocular lenses while the lenses are molded, in which a mold having a hydrophilic surface is used and its hydrophilic surface is first coated with a hydrophilic monomer, and the polymerizing composition is introduced into the mold and polymerized therein while simultaneously copolymerized with the hydrophilic monomer existing on the mold surface to thereby make the molded polymer article have a hydrophilic surface, as in the method which the present inventors have previously developed (Japanese Patent Application No. 293299/1997).

EXAMPLES

The invention is described concretely with reference to the following Examples, which, however, are not whatsoever intended to restrict the scope of the invention. In the following Examples, the physical properties of the ocular lens materials and the ocular lenses (contact lenses) were measured and evaluated according to the methods mentioned below. Unless otherwise specifically indicated, "parts" in the following Examples and Comparative Examples are all by weight.

(1) Oxygen Permeation Coefficient (Dk):

Five test pieces that differ in the thickness falling between 0.2 and 0.7 mm but have the same-diameter of 15 mm are cut out of the ocular lens material (copolymer) obtained in the following Examples and Comparative Examples, and the oxygen permeation through them in distilled water at 35°C is measured with a Seikaken-type film oxygen permeation meter (by Rika Seiki Kogyo). The data are plotted on a graph of which the X-axis indicates the reciprocal of the thickness of the samples tested and the Y-axis indicates the reciprocal of the oxygen permeation through the samples, and the Y-section of the regression curve is read. Its reciprocal is the oxygen permeation coefficient of the sample tested (unit: cc·cm/cm$^2$·sec·mmHg).

(2) Flexural Modulus:

A cubic test sample of which one edge is 5.0 mm long is cut out of the ocular lens material (copolymer) obtained in the following Examples and Comparative Examples. Using a tester, (Mac Science's TMA-4000), this is tested for compression with gradually increasing the load applied thereto. The maximum load to it is 500 g, and the load area is 0.785 mm$^2$ (this is a circle having a diameter of 1 mm). The test data are plotted on a graph of which the X-axis indicates the strain of the sample tested (unit: %) and the Y-axis indicates the stress thereof (unit: g/mm$^2$). From the inclination of the linear part of the curve thus drawn, obtained is the flexural modulus of the sample (unit: MPa).

(3) Ultimate Strain:

A cubic test sample of which one edge is 5.0 mm long is cut out of the ocular lens material (copolymer) obtained in the following Examples and Comparative Examples. Using a tester, (Mac Science's TMA-4000), this is tested for compression with gradually increasing the load applied thereto. The maximum load to it is 500 g, and the load area is 0.785 mm$^2$ (this is a circle having a diameter of 1 mm). When the sample tested has broken in the test, its deformation [that is, the deformed depth of the sample (unit: mm)] is measured, and the ultimate strain (%) of the

sample is obtained according to the numerical formula mentioned below. When the sample is not broken in the test, its deformation is measured at the point at which the maximum load is applied thereto (that is, at the point at which a load of 500 g is applied to the sample) is measured, and the ultimate strain of the sample is obtained according to the following numerical formula.

The samples (for ocular lenses) having a larger ultimate strain in the test method are less brittle and have better durability.

$$\text{Ultimate Strain (\%)} = (h/H) \times 100$$

in which h indicates the deformation (mm) of the test sample at break or under maximum load; and H indicates the height (mm) of the test sample under no load.

(4) Transparency:

The ocular lens material (copolymer) obtained in the following Examples and Comparative Examples is visually checked. Those that are transparent with no cloud are good, or that is, they are transparent (OO); and those that are cloudy are not good, or that is, they are not transparent (×).

(5) Contact Angle:

Using a contact angle meter (Elmer Optics' G-1), the contact angle of the front surface of the contact lens obtained in the following Examples and Comparative Examples to a water drop put thereon is measured in a water drop method at 25°C.

(6) Shape Stability:

The contact lenses obtained in the following Examples and Comparative Examples are dipped in a physiological saline solution for 6 months (the mean water temperature during dipping is about 20°C). After thus dipped for 6 months, the base curve of each lens is measured. Those of which the base curve fluctuation width is less than 0.1 mm are good, or that is, their shape stability is good (OO); and those of which the base curve fluctuation width is 0.1 mm or more are not good, or that is, their shape stability is not good (×).

The abbreviations and the details of the monomers used in the following Examples and Comparative Examples are mentioned below.

(i) MPPS-60: Difunctional organosiloxane monomer (I) of the following chemical formula (i):

MPPS-60

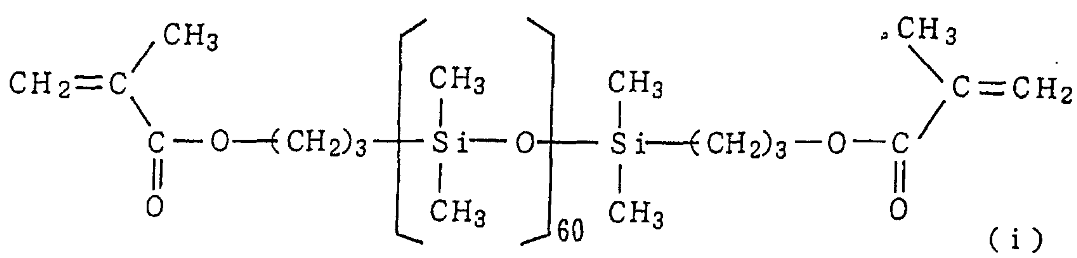

(i)

(ii) MPPS-40: Difunctional organosiloxane monomer (I) of the following chemical formula (ii):

MPPS-40

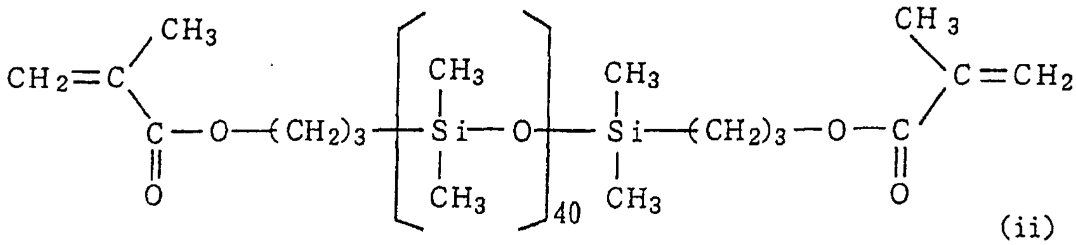

(ii)

(iii) MACE: Monocyclic monomer (II) of the following chemical formula (iii) (cyclohexyl methacrylate):

MACE

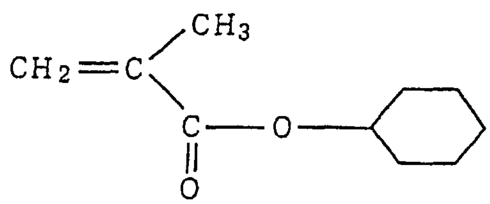

(iii)

(iv) MPTTS: Monofunctional organosiloxane monomer (III) of the following chemical formula (iv):

MPTTS

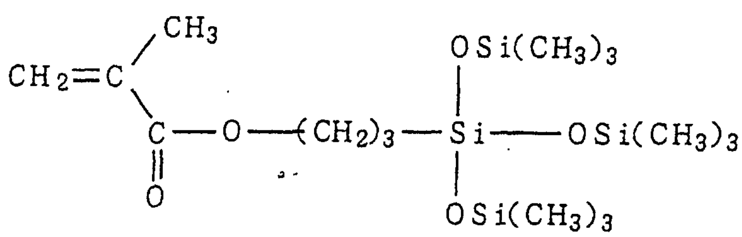

(iv)

(v) MPMTS: Monofunctional organosiloxane monomer (III) of the following chemical formula (v):

MPMTS

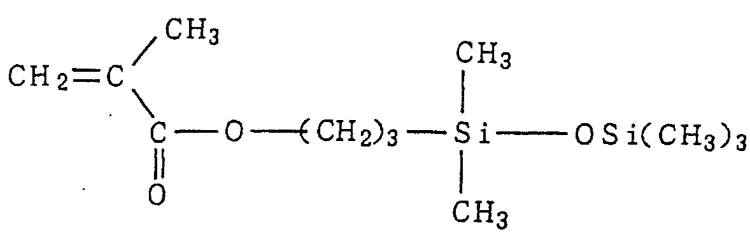

(v)

(vi) MMPPS: Monofunctional organosiloxane monomer (III) of the following chemical formula (vi):

MMPPS

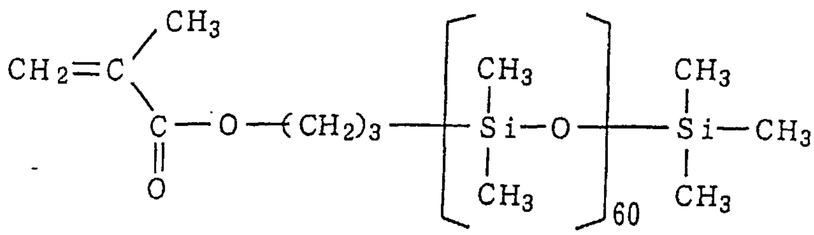

(vi)

<<Example 1>>

(1)

(i) 65 part of a difunctional organosiloxane monomer (I) (MPPS-60), 15 parts of a monocyclic monomer (II) (MACE) and 20 parts of a monofunctional organosiloxane monomer (III) (MPTTS) were mixed, to which was added 0.5 parts of benzoin methyl ether (photopolymerization initiator) to prepare a polymerizing monomer mixture. This was degassed, and cast onto a quartz glass sheet having a Teflon spacer put thereon, and covered with another quartz glass sheet. This was then exposed to a 150 W high-pressure mercury lamp for 10 minutes, and polymerized into a copolymer. The copolymer obtained was colorless and transparent.
(ii) The copolymer obtained in the above (i) was peeled from the quartz glass sheets, and this is an ocular lens material. As in Table 1 below, the ocular lens material is completely transparent with no cloud, and has no optical strain.
(iii) Five test pieces for measurement of oxygen permeation coefficient, which differ in the thickness falling between 0.2 and 0.7 mm but have the same diameter of 15 mm, and cubic test samples for measurement of flexural modulus and ultimate strain, of which one edge is 5.0 mm long, were cut out of the ocular lens material obtained in the above (ii), and they were tested for the oxygen permeation coefficient, the flexural modulus and the ultimate strain according to the methods mentioned above. The test data are given in Table 1 below.

(2)

(i) The inner surface of a polyvinyl alcohol mold for contact lens production (mold material: KURARAY POVAL CP-1000) was coated with a 3 % isopropanol solution of 2-methacryloyloxyethylphosphorylcholine (hydrophilic monomer), and dried to form a hydrophilic monomer layer on the inner surface of the mold for contact lens production.
(ii) The same polymerizing monomer mixture as that used in the above (i) of (1) was filled in the mold for contact lens production prepared in the above (i), and photo-polymerized by exposing it to a 150 W high-pressure mercury lamp for 10 minutes. With the copolymer formed therein, the mold was dipped in water to dissolve the polyvinyl alcohol mold in water, and contact lenses were thus produced. The contact lenses thus produced were transparent and had a smooth surface, and their wettability with water was good. The contact angle to water of the contact lens, and the shape stability thereof were measured according to the methods mentioned above. The test data are given in Table 1 below.

<<Example 2>>

(1)

(i) 65 part of a difunctional organosiloxane monomer (I) (MPPS-40), 15 parts of a monocyclic monomer (II) (MACE) and 20 parts of a monofunctional organosiloxane monomer (III) (MPTTS) were mixed, to which was added 0.5 parts of benzoin methyl ether (photopolymerization initiator) to prepare a polymerizing monomer mixture. This was degassed, and cast onto a quartz glass sheet having a Teflon spacer put thereon, and covered with another quartz glass sheet. This was then exposed to a 150 W high-pressure mercury lamp for

10 minutes, and polymerized into a copolymer. The copolymer obtained was colorless and transparent.

(ii) The copolymer obtained in the above (i) was peeled from the quartz glass sheets, and this is an ocular lens material. As in Table 1 below, the ocular lens material is completely transparent with no cloud, and has no optical strain.

(iii) Five test pieces for measurement of oxygen permeation coefficient, which differ in the thickness falling between 0.2 and 0.7 mm but have the same diameter of 15 mm, and cubic test samples for measurement of flexural modulus and ultimate strain, of which one edge is 5.0 mm long, were cut out of the ocular lens material obtained in the above (ii), and they were tested for the oxygen permeation coefficient, the flexural modulus and the ultimate strain according to the methods mentioned above. The test data are given in Table 1 below.

(2)

(i) A polypropylene mold for contact lens production was prepared. The same polymerizing monomer mixture as that used in the above (i) of (1) was filled in the mold, and photo-polymerized by exposing it to a 150 W high-pressure mercury lamp for 10 minutes to obtain contact lens-shaped articles.

(ii) The contact lens-shaped articles obtained in the above (i) were hydrophilicated on their surface through plasma treatment in an oxygen atmosphere to be contact lenses. The contact lenses thus produced were transparent and had a smooth surface, and their wettability with water was good. The contact angle to water of the contact lens, and the shape stability thereof were measured according to the methods mentioned above. The test data are given in Table 1 below.

<<Examples 3 and 4>>

(1) The same monomers as in Example 1, or that is, the difunctional organosiloxane monomer (I) (MPPS-60), the monocyclic monomer (II) (MACE) and the monofunctional organosiloxane monomer (III) (MPTTS) were used, but the blend ratio of these monomers was varied as in Table 1 below. Using the monomers in the varying ratio, ocular lens materials and contact lenses were produced in the same manner as in (1) and (2) of Example 1.

(2) The transparency, the oxygen permeation coefficient, the flexural modulus and the ultimate strain of the ocular lens materials obtained in (1) were evaluated and measured, and the contact angle to water of the contact lenses obtained in (1) and the shape stability thereof were measured, according to the methods mentioned hereinabove. The test data are given in Table 1 below.

<<Examples 5 to 9>>

(1) Using a difunctional organosiloxane monomer (I), a monocyclic monomer (II) and a monofunctional organosiloxane monomer (III) in the ratio as in Table 2 below, ocular lens materials and contact lenses were produced in the same manner as in (1) and (2) of Example 1.

(2) The transparency, the oxygen permeation coefficient, the flexural modulus and the ultimate strain of the ocular lens materials obtained in (1) were evaluated and measured, and the contact angle to water of the contact lenses obtained in (1) and the shape stability thereof were measured, according to the methods mentioned hereinabove. The test data are given in Table 2 below.

<<Comparative Example 1>>

Using a difunctional organosiloxane monomer (I) (MPPS-60) alone, an ocular lens material and contact lenses were produced in the same manner as in (1) and (2) of Example 1. The transparency, the oxygen permeation coefficient, the flexural modulus and the ultimate strain of the ocular lens material obtained herein were evaluated and measured, and the contact angle to water of the contact lenses obtained herein and the shape stability thereof were measured, according to the methods mentioned hereinabove. The test data are given in Table 3 below.

<<Comparative Example 2>>

Using a monofunctional organosiloxane monomer (III) (MPTTS) alone, an ocular lens material and contact lenses were produced in the same manner as in (1) and (2) of Example 1. The transparency, the oxygen permeation

coefficient, the flexural modulus and the ultimate strain of the ocular lens material obtained herein were evaluated and measured, and the contact angle to water of the contact lenses obtained herein and the shape stability thereof were measured, according to the methods mentioned hereinabove. The test data are given in Table 3 below.

«Comparative Example 3»

Using a difunctional organosiloxane monomer (I) (MPPS-60) and a monocyclic monomer (II) (MACE) in the ratio as in Table 3 below, an ocular lens material and contact lenses were produced in the same manner as in (1) and (2) of Example 1. The transparency, the oxygen permeation coefficient, the flexural modulus and the ultimate strain of the ocular lens material obtained herein were evaluated and measured, and the contact angle to water of the contact lenses obtained herein and the shape stability thereof were measured, according to the methods mentioned hereinabove. The test data are given in Table 3 below.

«Comparative Example 4»

Using a difunctional organosiloxane monomer (I) (MPPS-60) and a monofunctional organosiloxane monomer (III) (MPTTS) in the ratio as in Table 3 below, an ocular lens material and contact lenses were produced in the same manner as in (1) and (2) of Example 1. The transparency, the oxygen permeation coefficient, the flexural modulus and the ultimate strain of the ocular lens material obtained herein were evaluated and measured, and the contact angle to water of the contact lenses obtained herein and the shape stability thereof were measured, according to the methods mentioned hereinabove. The test data are given in Table 3 below.

[Table 1]

| | Example 1 | Example 2 | Example 3 | Example 4 |
|---|---|---|---|---|
| [Starting Material (monomer composition) (pts.)] ·Difunctional Organosiloxane Monomer (I) MPPS-60 [formula (i)] | 65 | | 55 | 30 |
| MPPS-40 [formula (ii)] | | 65 | | |
| ·Monocyclic Monomer (II) MACE [formula (iii)] | 15 | 15 | 15 | 20 |
| ·Monofunctional Organosiloxane Monomer (III) MPTTS [formula (iv)] | 20 | 20 | 30 | 50 |
| MPMTS [formula (v)] | | | | |
| MMPPS [formula (vi)] | | | | |
| [Physical Properties of Ocular Lens Material] Oxygen Permeation Coefficient (Dk)[1)] | $265\times10^{-11}$ | $258\times10^{-11}$ | $207\times10^{-11}$ | $228\times10^{-11}$ |
| Flexural Modulus (MPa) | 6.2 | 7.3 | 8.8 | 6.7 |
| Ultimate Strain (%) | 70 | 75 | 65 | 63 |
| Transparency | OO | OO | OO | OO |
| [Physical Properties of Contact Lens] Contact Angle | 50° | 53° | 58° | 62° |
| Shape Stability | OO | OO | OO | OO |

1) Unit of oxygen permeation coefficient (Dk): cc·cm/cm$^2$·sec·mmHg.

[Table 2]

| | Example 5 | Example 6 | Example 7 | Example 8 | Example 9 |
|---|---|---|---|---|---|
| [Starting Material (monomer composition) (pts,)] ·Difunctional Organosiloxane Monomer (I) MPPS-60 [formula (i)] | | | | 55 | 55 |
| MPPS-40 [formula (ii)] | 75 | 55 | 30 | | |

[Table 2] (continued)

| | Example 5 | Example 6 | Example 7 | Example 8 | Example 9 |
|---|---|---|---|---|---|
| ·Monocyclic Monomer (II) MACE [formula (iii)] | 10 | 15 | 20 | 15 | 15 |
| ·Monofunctional Organosiloxane Monomer (III) MPTTS [formula (iv)] | 15 | 30 | 50 | | |
| MPMTS [formula (v)] | | | | 30 | |
| MMPPS [formula (vi)] | | | | | 30 |
| [Physical Properties of Ocular Lens Material] Oxygen Permeation Coefficient (Dk)1) | $239\times10^{-11}$ | $189\times10^{-11}$ | $263\times10^{-11}$ | $270\times10^{-11}$ | $235\times10^{-11}$ |
| Flexural Modulus (MPa) | 7.9 | 9.4 | 6.2 | 6.5 | 6.3 |
| Ultimate Strain (%) | 68 | 60 | 76 | 79 | 68 |
| Transparency | OO | OO | OO | OO | OO |
| [Physical Properties of Contact Lens] Contact Angle | 53° | 58° | 65° | 49° | 50° |
| Shape Stability | OO | OO | OO | OO | OO |

1) Unit of oxygen permeation coefficient (Dk): $cc\cdot cm/cm^2\cdot sec\cdot mmHg$.

[Table 3]

| | Comp. Ex. 1 | Comp. Ex. 2 | Comp. Ex. 3 | Comp. Ex. 4 |
|---|---|---|---|---|
| [Starting Material (monomer composition) (pts.)] ·Difunctional Organosiloxane Monomer (I) MPPS-60 [formula (i)] | 100 | | 70 | 70 |
| MPPS-40 [formula (ii)] | | | | |
| ·Monocyclic Monomer (II) MACE [formula (iii)] | | | 30 | |
| ·Monofunctional Organosiloxane Monomer (III) MPTTS [formula (iv)] | | 100 | | 30 |
| MPMTS [formula (v)] | | | | |
| MMPPS [formula (vi)] | | | | |
| [Physical Properties of Ocular Lens Material] Oxygen Permeation Coefficient (Dk)1) | $297\times10^{-11}$ | -2) | $151\times10^{-11}$ | $234\times10^{-11}$ |
| Flexural Modulus (MPa) | 2.6 | -3) | 13.2 | 5.8 |
| Ultimate Strain (%) | 5 | -3) | 35 | 20 |
| Transparency | OO | OO | OO | OO |
| [Physical Properties of Contact Lens] Contact Angle | 52° | 72° | 55° | 57° |
| Shape Stability | 00 | × | OO | OO |

1) Unit of oxygen permeation coefficient (Dk): $cc\cdot cm/cm^2\cdot sec\cdot mmHg$.

2) Since the samples underwent plastic deformation, their thickness could not be measured and therefore their flexural modulus could not be measured.

3) Since the samples underwent plastic deformation, their ultimate strain could not be measured.

From the results in Table 1 to Table 3 mentioned above, it is understood that the ocular lens materials and the ocular lenses (contact lenses) of Examples 1 to 9, which are made of a copolymer produced from a monomer mixture of essentially a difunctional organosiloxane monomer (I), a monocyclic monomer (II) and a monofunctional organosiloxane monomer (III), are highly transparent and ensure high oxygen permeability through them, that their

flexural moduli are low and they are flexible, that they have a good feel to eyes, that their ultimate strain values are high and they are durable, that their contact angle to water falls within a suitable range and their wettability with water and their hydrophilicity are good but are not too high and therefore bacteria and fungi hardly grow around them, that they do not require sterilization and disinfection, and that their shape stability is good and therefore even when they are continuously used for a long time, their shape and dimension vary little and they deform little.

As opposed to these, it is understood that the ocular lens material and the ocular lenses (contact lenses) of Comparative Example 1, which are made of a homopolymer of a difunctional organosiloxane monomer (I) alone, are brittle and are not durable as their ultimate strain value is extremely low, and therefore they are substantially not usable for ocular lens material and ocular lenses.

It is also understood that the ocular lens material and the ocular lenses (contact lenses) of Comparative Example 2, which are made of a homopolymer of a monofunctional organosiloxane monomer (III) alone, undergo plastic deformation and shape deformation, and therefore they are substantially not usable for ocular lens material and ocular lenses.

It is further understood that the ocular lens material and the ocular lenses (contact lenses) of Comparative Example 3, which are made of a copolymer of a difunctional organosiloxane monomer (I) and a monocyclic monomer (II), are not durable as their ultimate strain value is low and that they are not flexible and do not have a good feel to eyes as their flexural modulus is high.

It is still further understood that the ocular lens material and the ocular lenses (contact lenses) of Comparative Example 4, which are made of a copolymer of a difunctional organosiloxane monomer (I) and a monofunctional organosiloxane monomer (III), are not durable as their ultimate strain value is low.

INDUSTRIAL APPLICABILITY

The ocular lens material and the ocular lenses of the invention have good oxygen permeability, mechanical strength, durability and flexibility and have good other properties of shape stability, transparency and suitable wettability with water, and their properties are well balanced and satisfy the requirements for ocular lens material and ocular lenses. Therefore, the ocular lenses, especially contact lenses and intraocular implants of the invention have a good feel to eyes and are easy to handle, and their strength, durability, deformation resistance and safety are all good. They do not require sterilization and disinfection since microbes such as bacteria and fungi hardly grow around them.

## Claims

1. An ocular lens material which comprises a copolymer obtained by polymerizing a monomer mixture of essentially (a) an organosiloxane monomer of the following general formula (I):

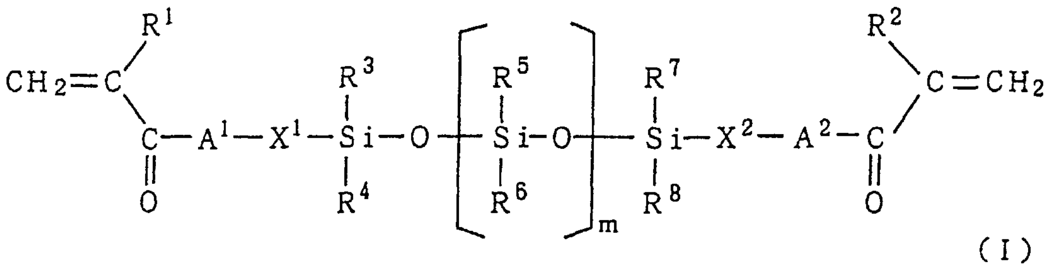

(I)

wherein $R^1$ and $R^2$ each independently represent a hydrogen atom or a methyl group; $R^3$, $R^4$, $R^5$, $R^6$, $R^7$ and $R^8$ each independently represent a monovalent hydrocarbon group with from 1 to 10 carbon atoms optionally substituted with fluorine atom(s); $A^1$ and $A^2$ each independently represent an oxygen atom, a sulfur atom, or a group of a formula, $-NR^9-$ (in which $R^9$ represents a hydrogen atom, or a monovalent hydrocarbon group with from 1 to 10 carbon atoms optionally substituted with fluorine atom(s)); $X^1$ and $X^2$ each independently represent a single bond, or a divalent organic group; and m indicates an integer falling between 0 and 300;
(b) a monomer of the following general formula (II):

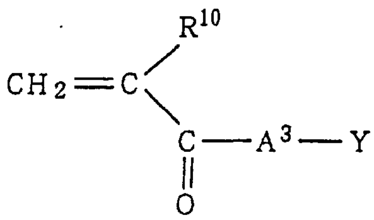

(II)

wherein $R^{10}$ represents a hydrogen atom or a methyl group; $A^3$ represents an oxygen atom, a sulfur atom, or a group of a formula, $-NR^{11}-$ (in which $R^{11}$ represents a hydrogen atom, or a monovalent hydrocarbon group with from 1 to 10 carbon atoms optionally substituted with fluorine atom(s)); Y represents a monovalent hydrocarbon group derived from a monocyclic hydrocarbon; and (c) an organosiloxane monomer of the following general formula (III):

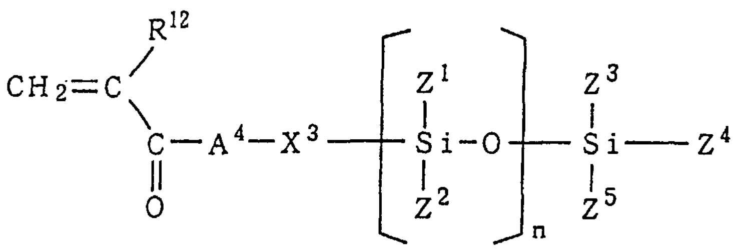

(III)

wherein $R^{12}$ represents a hydrogen atom or a methyl group; $A^4$ represents an oxygen atom, a sulfur atom, or a group of a formula, $-NR^{13}-$ (in which $R^{13}$ represents a hydrogen atom, or a monovalent hydrocarbon group with from 1 to 10 carbon atoms optionally substituted with fluorine atom(s)); $X^3$ represents a single bond or a divalent organic group; $Z^1$, $Z^2$, $Z^3$, $Z^4$ and $Z^5$ each independently represent a monovalent hydrocarbon group with from 1 to 10 carbon atoms optionally substituted with fluorine atom(s), or a group of a formula $-OR^{14}$ (in which $R^{14}$ represents a monovalent hydrocarbon group with from 1 to 10 carbon atoms optionally substituted with fluorine atom (s)), or a group of a formula $-O-SiR^{15}R^{16}R^{17}$ [in which $R^{15}$, $R^{16}$ and $R^{17}$ each independently represent a monovalent hydrocarbon group with from 1 to 10 carbon atoms optionally substituted with fluorine atom(s), or a group of a formula $-O-R^{18}$ (in which $R^{18}$ represents a monovalent hydrocarbon group with from 1 to 10 carbon atoms optionally substituted with fluorine atoms)]; and n indicates an integer falling between 0 and 300.

**2.** The ocular lens material as claimed in claim 1, which comprises a copolymer obtained by polymerizing a monomer mixture in which the total content of the organosiloxane monomer of formula (I), the monomer of formula (II) and the organosiloxane monomer of formula (III) is at least 70 % by weight of the monomer mixture.

**3.** The ocular lens material as claimed in claim 1 or 2, which comprises a copolymer obtained by polymerizing a monomer mixture in which the contents of the organosiloxane monomer of formula (I), the monomer of formula (II) and the organosiloxane monomer of formula (III) each fall between 5 and 80 % by weight of the monomer mixture.

**4.** Ocular lenses made of the ocular lens material of any one of claims 1 to 3.

**5.** Ocular lenses as claimed in claim 4, which are contact lenses.

**6.** Ocular lenses as claimed in claim 4 or 5, which have a hydrophilicated surface.

## INTERNATIONAL SEARCH REPORT

International application No.
PCT/JP99/05330

A. CLASSIFICATION OF SUBJECT MATTER
Int.Cl[6] G02C7/04, C08F290/06, A61F2/16

According to International Patent Classification (IPC) or to both national classification and IPC

B. FIELDS SEARCHED

Minimum documentation searched (classification system followed by classification symbols)
Int.Cl[6] G02C7/04, C08F290/06, A61F2/16

Documentation searched other than minimum documentation to the extent that such documents are included in the fields searched
Jitsuyo Shinan Koho 1926-1996 Toroku Jitsuyo Shinan Koho 1994-1999
Kokai Jitsuyo Shinan Koho 1971-1999 Jitsuyo Shinan Toroku Koho 1996-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 3-223321, A (Asahi Chemical Industry Co., Ltd.), 02 October, 1991 (02.10.91), Full text; all drawings (Family: none) | 1-5 |
| A | JP, 8-227001, A (Menicon Co., Ltd.), 03 September, 1996 (03.09.96), Full text; all drawings (Family: none) | 1-6 |
| E,X | JP, 11-287971, A (Kuraray Co., Ltd.), 19 October, 1999 (19.10.99), Full text; all drawings (Family: none) | 1-6 |
| Y | JP, 11-228643, A (Menicon Co., Ltd.), 24 August, 1999 (24.08.99), Full text; all drawings & EP, 937998, A2 | 1-5 |
| Y | JP, 11-119168, A (Seed K.K.), 30 April, 1999 (30.04.99), Full text; all drawings (Family: none) | 1-6 |
| Y | JP, 6-121826, A (Menicon Co., Ltd.), | 1-5 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 November, 1999 (15.11.99) | 24 November, 1999 (24.11.99) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP99/05330

C (Continuation). DOCUMENTS CONSIDERED TO BE RELEVANT

| Category* | Citation of document, with indication, where appropriate, of the relevant passages | Relevant to claim No. |
|---|---|---|
| | 06 May, 1994 (06.05.94),<br>Full text; all drawings<br>& EP, 584826, A2 & US, 5346946, A | |
| Y | JP, 6-32855, A (Nippon Contact Lens K.K.),<br>08 February, 1994 (08.02.94),<br>Full text; all drawings (Family: none) | 1-5 |
| A | JP, 11-172149, A (Kuraray Co., Ltd.),<br>29 June, 1999 (29.06.99),<br>Full text; all drawings<br>& EP, 908476, A2 & CN, 1214298, A<br>& CA, 2248467, A1 | 6 |

Form PCT/ISA/210 (continuation of second sheet) (July 1992)